# EUROPEAN PATENT SPECIFICATION

(11) **EP 3 280 245 B1**
(45) Date of publication and mention of the grant of the patent: **13.03.2019**
(21) Application number: 16731356.8
(22) Date of filing: 24.03.2016
(51) Int. Cl.: A01D 41/127, A01F 15/08, G01N 21/15, A01C 7/10

(54) **AGRICULTURAL PROCESSING MACHINE WITH A MEASURING DEVICE BEHIND A WINDOW AND AGRICULTURAL MATERIAL PROCESSING METHOD**
LANDWIRTSCHAFTLICHE BEARBEITUNGSMASCHINE MIT EINER MESSEINRICHTUNG HINTER EINEM FENSTER UND LANDWIRTSCHAFTLICHES MATERIALBEARBEITUNGSVERFAHREN
MACHINE DE TRAITEMENT AGRICOLE À DISPOSITIF DE MESURE DERRIÈRE UNE FENÊTRE ET PROCÉDÉ DE TRAITEMENT DE MATIÈRE AGRICOLE

(30) Priority: 08.04.2015 NL 2014592
(43) Date of publication of application: 14.02.2018
(73) Proprietor: Forage Innovations B.V., 3147 PB Maassluis (NL)
(72) Inventor: VAN MEURS, Matthew, 3147 PA Maassluis (NL)
(74) Representative: Octrooibureau Van der Lely N.V.
(86) International application number: PCT/NL2016/050204
(87) International publication number: WO 2016/171546

(56) References cited:
- DE-A1- 19 744 481
- US-A- 6 091 501
- US-A- 6 138 518
- US-A1- 2013 081 659
- US-A1- 2013 125 800
- US-A1- 2015 094 917
- US-B2- 7 372 034
- US-B2- 8 115 923

## Description

### FIELD OF THE INVENTION

The invention refers to an agricultural processing machine with a measuring device behind a window and a method for processing loose material by using such an agricultural processing machine.

### BACKGROUND OF THE INVENTION

An agricultural processing machine processes loose crop or other agricultural material, e.g. presses or threshes the crop material which has been picked up from the ground or stores it in a storing room or distributes seed corns or fertilizer over a field. It is desired to measure at least one characteristic of the loose agricultural material to be processed while the agricultural processing machine conveys or processes this loose material. While this characteristic is measured, the loose or processed material is conveyed along a measuring device. This device measures the desired material characteristic in a contactless manner while the loose material is conveyed along the measuring device.

In order to prevent pollution or a damage of the measuring device, a window is positioned between the measuring device and the conveyed loose material. The problem occurs that the window can be polluted by the loose material conveyed along the window. Several proposals for overcoming this problem were made.

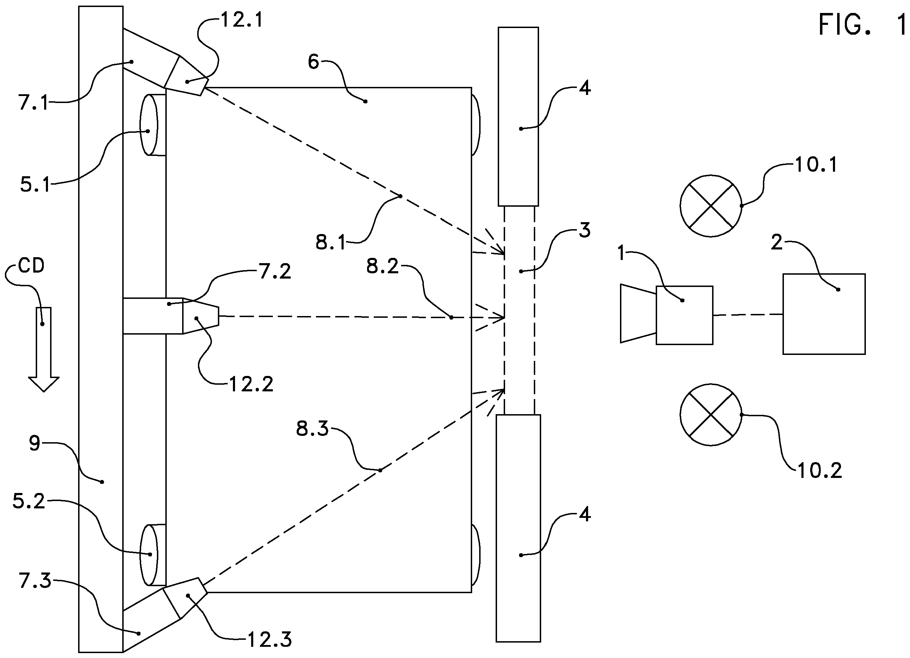

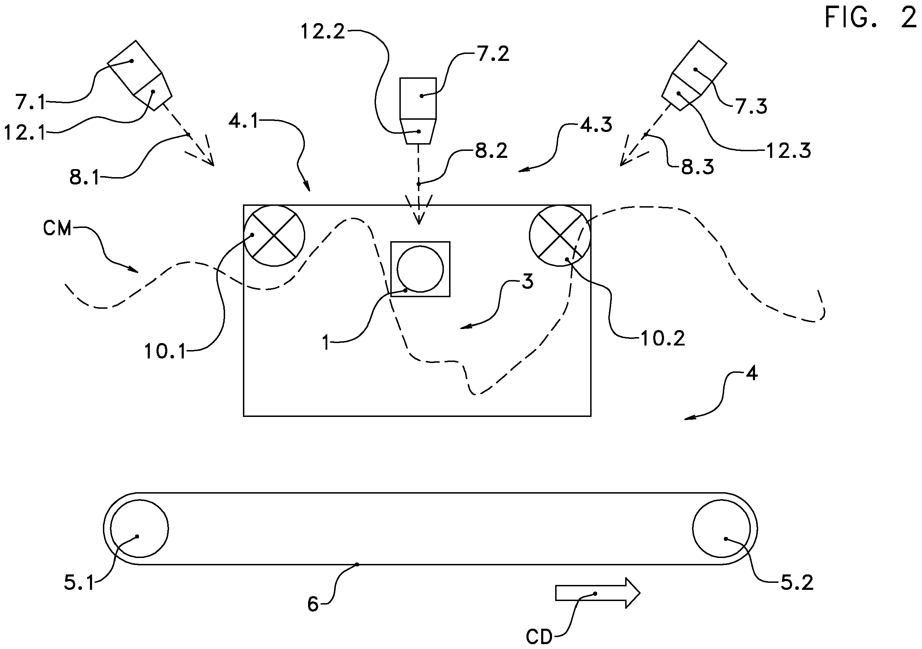

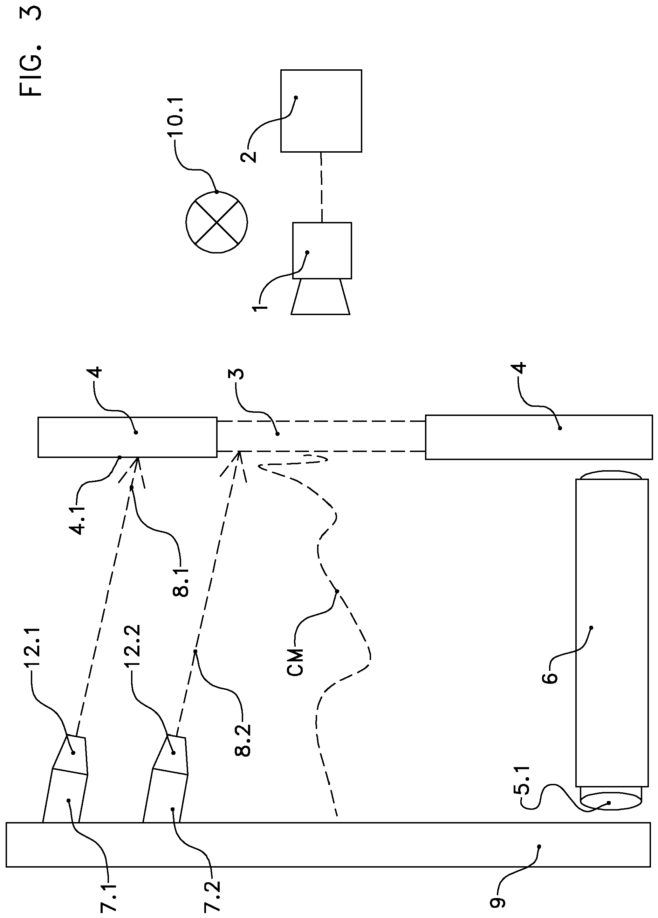

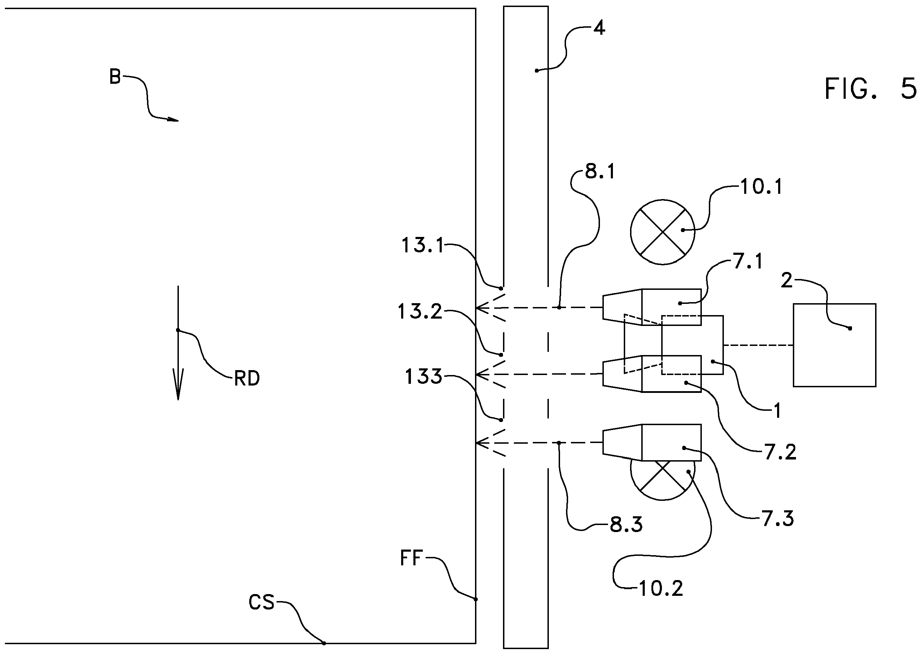

US 7,372,034 B2 discloses an agricultural measuring device 16 which is mounted on board of an agricultural harvester with a feeding channel 10. A holding plate 22 of the measuring device 16 is mounted in the sidewall 12. A pane 24 is inserted into the plate 22. An optical sensor 18 is positioned behind the pane 24 and is connected with the plate 22 by means of two support rolls 20. An actuator 30 can pivot the entire measuring device 16 with respect to the sidewall 12 around a pivoting axis 28 which is perpendicular to the conveying direction 27, compare Fig. 2a with Fig. 1 and Fig. 5 with Fig. 3. In a first (measuring) position the plate 22 with the pane 24 is in flush with the sidewall 12, cf. Fig. 1 and Fig. 3. In a second (cleaning) position the plate 22 is pivoted and extends into the feeding channel 10. Crop material contacts the pane 24 and cleans it and removes debris from it.

US 8,115,923 B1 discloses a harvester with a curved wall 54 surrounding a feeding channel. Two spectrometers 80a, 80b are mounted in the wall 54. The respective window 84 is slightly pivoted into the feeding channel (angle of 3 to 5 degrees). The flow of crop material along the window 84 cleans the window 84.

DE 19744481 A1 discloses a receptacle (Kornelevatorfuß 2) into which a conveying auger (Querforderschnecke 4) conveys crop material (Erntegut 7), cf. Fig. 1. A flexible stripping element 24 can strip over the surface of a moisture sensor 28, cf. Fig. 2. A flat sensor (Glattsensor 30) is mounted below the conveyor auger 4. The flat sensor 30 is cleaned by brushes (Borsten) mounted on the spiral (Schneckenwendel 6) of the auger 4. These brushes clean that surface 34 of the sensor 30 which points to the crop material 7. These cleaning elements 24, 32 can be cleaned by combat or stripping elements.

### SUMMARY OF THE INVENTION

A problem solved by the invention is to provide an agricultural processing machine with the features of the preamble of claim 1 and an agricultural loose material processing method with the features of the preamble of claim 10 wherein the window is cleaned without the need of positioning the window in a position in which the window projects or slopes towards the conveyed loose material and without the need of making the window being pivotal with respect to the wall.

This problem is solved by an agricultural processing machine with the features of claim 1 and by a loose material processing method with the features of claim 10. Preferred embodiments are specified in the depending claims.

The agricultural processing machine according to the invention comprises
- a conveying device,
- a wall,
- a measuring device, and
- at least one fluid ejector.

The measuring device comprises
- at least one sensor and
- a window inserted into the wall.

The window is positioned between
- the or at least one sensor of the measuring device and
- loose agricultural material which is conveyed along the window which is inserted into the wall.

The agricultural processing machine according to the invention operates as follows and the method according to the invention comprises the following steps:
- The conveying device conveys loose agricultural material along the wall and thereby along the window.
- The or at least one sensor behind the window measures in a contactless manner a characteristic of the loose material conveyed along the window.
- The or at least one fluid ejector ejects a fluid jet against a receiving surface which is formed on board and inside the agricultural processing machine. The term "fluid" is a common term for liquid and air. The receiving surface is positioned and the fluid jet is directed such that ejected fluid enters a space between the conveyed loose material and that surface of the window which points towards the conveyed loose material.
- The window is cleaned by the conveyed loose material containing ejected fluid.

### ADVANTAGES

According to the invention the or at least one sensor of the measuring device is arranged behind the window - seen in a viewing direction from the loose material to the sensor. The loose agricultural material to be investigated is conveyed along the wall and thereby along the window such that the window is between the loose material and the sensor. Therefore the window protects the sensor from being polluted or even damaged by the conveyed loose material. The space around the sensor is positioned behind the wall and behind the window and is therefore kept free of debris and dirt. Thereby the wall and the window i9nserted into the wall prevent loose material from entering into the space around the sensor. It is possible to make the wall and the window impermeable and to control the air moisture and the temperature around the sensor independently from the conditions in the feeding channel or pressing chamber through which the loose agricultural material is conveyed. In addition the windows ensure that a minimal distance between the sensor and the loose material is kept even if pressure is applied onto the loose material. This minimal distance is often required for reliably measuring the loose material characteristic. The minimal distance is determined by the construction of the machine and does not depend on properties of the loose material.

The window protects the or at least one sensor behind the window. But loose agricultural material may pollute this window, e.g. as sugar particles or wet loose crop material pieces stick on the window surface. A polluted window may yield wrong sensing results or may even block the sensor, in particular in the case of an optical sensor. The window may become more or less opaque or even impermeable for light. In addition a high amount of particles sticking on the window may scratch the window or may influence the flow of material conveyed along the window in an undesired manner.

The sensor behind the window automatically measures a characteristic of the conveyed loose material. Thanks to the invention the window is automatically cleaned during operation. It is not necessary to interrupt the operation of the agricultural processing machine for the purpose of measuring the characteristic or cleaning the window. Therefore it is possible to use the measured characteristic of the loose material for automatically controlling a part of the agricultural processing machine in an open-loop or closed-loop manner, for generating signals for a propelled vehicle which moves the processing machine over ground, or for generating alerts and further outputs for a human operator. The human operator can stay in a remote position, i.e. in a distance to the agricultural processing machine, e.g. in a driver's cabin of a pulling tractor or besides the agricultural field to be processed. The throughput through the machine is not reduced for the purpose of measuring the characteristic or cleaning the window.

The ejected and received fluid reduces the friction between the conveyed loose material and the window surface pointing to the loose material. Thanks to the fluid the risk is reduced that the loose material conveyed along the window scratches the window.

Thanks to the invention the window is automatically cleaned by the fluid on the window surface. Loose material particles which may have polluted the window are automatically removed. In particular sugar crystals or further particles which may stick at the window surface are automatically removed from the window.

According to the invention the loose agricultural material is conveyed along the window. The or at least one sensor behind the window measures a characteristic of the conveyed material. In an agricultural processing machine according to the invention the window is cleaned by a combination of the following two measures:
- The fluid which is transported by the fluid ejector and/or by the conveyed loose material on the window's surface and which dissolves and/or removes particles sticking at the window, e.g. sugar crystals, from the window and
- The loose agricultural material which is conveyed along the window and which takes away the dissolved or already removed particles from the window.

Thanks to the invention it is possible but not necessary to mount the window at or into the wall such that the window is sloping angularly with respect to the wall. The window can project but needs not necessarily project into a channel or cavity which is delimited by the wall and through which the loose material is conveyed.

Thanks to the invention it is also possible that the window is in flush with the wall. Thanks to the invention a window which is in flush with the wall is also automatically cleaned. It is possible but not necessary that an angle between the plane in which the window extends and the direction into which the loose material is conveyed occurs. It is also possible that the conveying direction of the loose material is parallel to the plane in which the window extends. It is also possible that the window is curved or arcuate. The feature that the window is in flush avoids a place at which debris may be collected which is often an undesired event. The flow of conveyed material is not influenced by the window when the window is in flush. In particular no undesired deflection or compression of the conveyed loose material is caused. The risk that the window is scratched is further reduced.

Thanks to the invention it is further possible but not necessary to make the window pivotal with respect to the wall. A pivotal window requires a retaining device which tends to pivot the window into a desired position and/or an actuator or handle which pivots the window and keeps the window in this pivotal position. The invention avoids the need for such a retaining device and such an actuator. In addition a window position sensor and a device for monitoring the actuator are saved.

Thanks to the invention it is possible but not necessary that a wiper or brush or other mechanical cleaning element cleans the window. For cleaning the window such a mechanical cleaning element must contact that surface of the window which points to the conveyed loose material. The mechanical cleaning element may come in contact with the conveyed loose material and can contribute to scratch the window. It may be necessary to remove collected loose material from the mechanical cleaning element. The invention, however, does not require a mechanical cleaning element which comes in contact with the window and saves the need of a stripping element which cleans the mechanical cleaning element. In addition the mechanical cleaning element needs space and a drive which oscillates or rotates or otherwise moves the mechanical cleaning element. The invention saves the need for such a drive. It is possible, however, to combine the invention with such a wiper or brush or further cleaning element.

The invention only requires one moving part for cleaning the window, namely a part which ejects the fluid, e.g. a pump for the or every fluid ejector. This moving part can be positioned at a desired position, in particular with a sufficient distance to the conveyed material and to the window. It suffices that the moving part is in fluid connection with a respective outlet of the or every fluid ejector, e.g. with a nozzle.

According to the invention at least one fluid ejector directs a jet of fluid against a surface in the interior of the agricultural processing machine. It is possible to position this fluid ejector at a suitable place. In particular the or one fluid ejector can be located spaced apart from the conveyed loose material. It is therefore possible to inhibit that the conveyed loose material comes in contact with the fluid ejector and reduces its performance, e.g. by blocking a fluid outlet. The ejection direction can also be selected in a proper way.

### PREFERED EMBODIMENTS

The agricultural processing machine can be an agricultural harvester which harvests and processes loose crop material, e.g. a round baler, a cuboid baler, a loader wagon, a combine harvester, or a field chopper. The loose processing machine can also be a seed or drilling machine, e.g. a machine which adds loose material to the ground. The loose material can be loose crop material picked up from a field. The loose material can also be loose seed material to be distributed onto the field, or fertilizer or preservatives, e.g. The agricultural machine can comprise ground-engaging wheels and a motor which rotates the ground-engaging wheels and thereby moves the machine over ground. The agricultural machine can also be a vehicle which comprises ground-engaging wheels and which is pulled or pushed over ground by a propelled vehicle. The agricultural machine can also be an implement to be mounted at a propelled vehicle.

The fluid can be a liquid or air. In one embodiment the fluid is warm or hot water, optionally with a solvent which is harmless for living beings. The fluid jet can be a continuous fluid stream or a sequence of fluid drops, e.g. The fluid can also consists of pressurized air or gas, e.g. taken from the air surrounding the processing machine.

The measuring device can detect the presence or absence of a given chemical or biological substance in the conveyed loose material, can measure a chemical composition of the loose material, or can measure the color, the reflecting property or the or volume or amount or mass flow of the conveyed loose material, e.g. In a further embodiment the actual speed with which the conveying device conveys the loose material is measured in a contactless manner by the measuring device.

In one embodiment the measuring device comprises an illumination source which emits light in the visible range or infrared or ultraviolet light or ultrasonic waves towards the conveyed loose material. Preferably the illumination source is also behind the window and thereby protected by the window. The light or waves are reflected by the conveyed loose material. A receiver of the measuring device receives and analyses the reflected light or waves. Preferably the illumination source is also positioned behind the window.

In one embodiment the or at least one fluid jet is directed onto that surface of the window itself which points to the conveyed loose material. In a further embodiment the fact is utilized that the window is inserted into a wall. At least one fluid jet is directed onto an area of the wall wherein this wall area is positioned vertically or sloping above the window. Thanks to the force of gravity the fluid flows downwards onto the window surface. This embodiment makes it possible to select as the area for receiving the fluid jet a wall area positioned above the flow of conveyed loose material. It is possible to apply the fluid onto the window even if a big amount of loose material is conveyed along the window and covers the entire window. The fluid jet passes this loose material. It is not necessary to direct the fluid jet through the conveyed loose material.

In one implementation one fluid ejector ejects a fluid jet onto a wall area vertically above the window. A further fluid ejector ejects a further fluid jet onto a wall area angularly above the window. Thanks to this embodiment ejected fluid reaches the window even if the agricultural processing machine is operated with different inclinations, e.g. when the machine is part of a vehicle which is operated in a hilly environment. The term "vertically above" refers to the orientation in the case that the machine stands on a horizontal ground.

In yet a further embodiment the feature is utilized that the conveying device conveys the loose material in a conveying direction along the window. The or at least one fluid jet is directed onto a wall area which is positioned upstream of the window - upstream seen in the conveying direction of the loose material. The loose material is first conveyed along this wall area and takes the received fluid. Afterwards the loose material with the fluid is conveyed along the window. Thereby the loose material conveys the fluid along the window such that the window is cleaned.

In one embodiment the agricultural material is quite loose when be conveyed along the window. A characteristic of the loose agricultural material is measured. The results from the measuring device are available in an early stage of processing the loose material. The loose material can be crop material, e.g. hay, straw, seed, or dry fertilizer, e.g. The measured characteristic can be used for controlling the process of compressing the loose material on board of the machine.

In a further embodiment the loose agricultural material is compressed together before or when being conveyed along the window. This is explained for the case of loose crop material. A characteristic of the crop material to be compressed or already compressed is measured. The expanding force of the compressed crop material improves the cleaning function of the conveyed crop material. The compressed crop material forms an object with a surface while being conveyed along the wall. This surface points to the window. In one embodiment the fluid jet is directed onto the surface of the crop material itself at a place upstream of the window - seen upstream in the conveying direction of the compressed crop material. In a further embodiment the fluid is directed onto a wall part upstream of the window. The fluid directed onto this receiving surface is taken by the conveyed crop material and is conveyed along the window.

In one embodiment the or at least one fluid ejector ejects permanently a fluid jet. In a further embodiment the ejection of fluid jet depends on the amount of loose conveyed material before the window. The or at least one fluid jet is only ejected if the amount of conveyed loose material is below a given threshold. If the loose material amount is above this threshold, the or at least one fluid ejector does not eject at all a fluid jet. This embodiment ensures that a fluid jet is only ejected if it can reach the window or a wall area above the window and if the ejected fluid jet is not absorbed due to a high amount of conveyed loose material. This embodiment saves fluid which otherwise would be ejected without achieving a cleaning function.

In one embodiment the ejected amount per time of fluid remains constant. In a further embodiment the amount per time is varied, e.g. depending on the measured amount of conveyed loose material.

In one embodiment an actuator can pivot the or at least one fluid ejector with respect to the receiving surface, e.g. wall or window, such that the direction of the fluid jet is changed. The fluid ejector can be pivoted according to a given pivoting scheme (open loop control) or depending on the measured amount or conveying velocity or further characteristic of the loose material (closed-loop control).

It is also possible that the fluid ejector ejects the fluid jet in a time-triggered manner. A combination is also possible: The fluid ejector ejects the fluid jet if the loose material amount is below a given threshold or after the fluid jet ejection has been interrupted for a given time span.

In one application the agricultural processing machine forms under pressure from loose crop material at least one round-cylindrical bale in a bale forming chamber. This bale forming chamber is drum-shaped and is limited by two opposing sidewalls and a bale forming means (pressing rollers and/or pressing belts, e.g.). The round-cylindrical bale has two front faces pointing towards the and contacting the two sidewalls. The round-cylindrical bale is rotated in the bale forming chamber such that every front face is conveyed along the corresponding sidewall. Into at least one sidewall a window is inserted. The sensor is positioned behind this window, i.e. outside of the bale forming chamber.

In one embodiment at least one fluid ejector ejects a fluid jet onto that front face of the bale which points towards the window. The front face provided with fluid is conveyed along the window and cleans the window. In a further embodiment the or one fluid ejector ejects a fluid against one sidewall which comes into contact with a front face wherein the window is inserted into this sidewall.

In a further application the agricultural processing machine according to the invention forms from loose crop material cuboid bales in a pressing channel with four sidewalls. A pressing member, e.g. an oscillating pressing piston, forms a string of crop material in the pressing channel. In one embodiment the or at least one window is inserted into one sidewall. At least one fluid jet is directed onto the string of material at a position upstream of the window. The string with the fluid cleans the window surface.

In yet a further application the window is inserted into a feeding channel which guides into a pressing chamber or channel of a baler. The or at least one sensor is positioned behind the window and therefore outside of the feeding channel. This baler forms round-cylindrical or cuboid bales. The crop material characteristic is measured while the crop material is conveyed through the feeding channel. The window can also be inserted onto a feeding channel of a further harvester, e.g. a loader wagon, field chopper, or combine harvester.

In one embodiment the conveying device conveys dry fertilizer or seed material along the window. The measuring device measures a characteristic of the fertilizer or seed material.

These and other aspects of the invention and of the preferred embodiment will be even more apparent from the detailed embodiment as described below and will be elucidated in detail there.

### BRIEF DESCRIPTION OF THE DRAWINGS

Fig. 1 shows in a top view a first embodiment of the invention in which three fluid jets are directed, one jet on the window and two jets on a wall surface above the window;
Fig. 2 shows the first embodiment of Fig. 1 in a side view in a viewing direction perpendicular to the conveying direction and towards the window;
Fig. 3 shows the first embodiment of Fig. 1 and Fig. 2 in a side view in a viewing direction parallel to the conveying direction and parallel to the window plane;
Fig. 4 shows in a side view a second embodiment of the invention in which every fluid jet is directed onto a wall surface upstream of the window;
Fig. 5 shows in a top view a third embodiment of the invention in which three fluid jets are directed onto a front face of a round-cylindrical bale;
Fig. 6 shows the third embodiment of Fig. 5 in a side view in a viewing direction perpendicular to the conveying direction and towards the bale wherein the front face of the bale is in the drawing plane;
Fig. 7 shows the third embodiment of Fig. 5 and Fig. 6 in a side view wherein the front face of the bale and the window plane are perpendicular to the drawing plane.

### DETAILED DESCRIPTION OF EMBODIMENT

In every embodiment described below the agricultural processing machine processes loose crop material, e.g. hay, straw, silage. The machine is a harvester, in particular a baler with a bale forming chamber or a loader wagon or combine harvester or field chopper with a storing room. A pick-up unit picks up loose crop material from the ground. A conveyor conveys the picked-up crop material towards a bale forming chamber or towards the storing room (not shown). It is also possible that the harvester does not comprise an own pick-up unit and loose crop material is otherwise collected and dropped on the conveyor.

In the first and second embodiments the picked-up or otherwise collected loose crop material is automatically analyzed by a measuring device in a contactless manner while the crop material is conveyed and before being injected into the bale forming chamber or storage room. In the third embodiment the pressed crop material in the forming chamber is automatically analyzed.

In every embodiment the signals from the measuring device are used for controlling a moved part of the harvester or for generating an alert or a further message for the operator or for generating a signal which is transmitted to a control unit of a pulling tractor or to a remote data processing center or mobile computer, e.g.

In one application the measuring device analyzes the color of the crop material in the visible or infrared or ultraviolet light spectrum. In a further application the measuring device detects a chemical property of the crop material, e.g. the moisture or dry matter contact. In just a further application the volume or amount or specific weight of crop material conveyed along the measuring device or the actual conveying speed or the mass flow are measured in a contactless manner.

Fig. 1 to Fig. 3 show a first embodiment of the invention and thereby of the measuring device and the fluid ejectors in three perpendicular viewing directions. Fig. 1 shows the first embodiment in a top view, Fig. 2 and Fig. 3 in two different side views. The viewing direction of Fig. 2 is perpendicular to the conveying direction and the viewing direction in Fig. 3 is parallel to the conveying direction.

Fig. 1 to Fig. 3 show schematically the following parts according to the first embodiment:
- a bottom conveying belt 6 which conveys loose crop material collected on the belt 6,
- two deflecting rollers 5.1, 5.2 around which the conveyor belt 6 is guided wherein at least one deflecting roller 5.1, 5.2 is driven,
- a wall 4 into which a window 3 is inserted,
- an opposing wall 9,
- two light sources 10.1, 10.2 which emit light onto the conveyed crop material CM and which are positioned behind the window 3,
- a camera 1 which receives light reflected by the crop material CM and generates image signals and which is positioned behind the window 3,
- an image processing unit 2 which automatically processes signals from the camera 1, and
- three fluid ejectors 7.1, 7.2, 7.3 with three nozzles 12.1, 12.2, 12.3 which eject three fluid jets 8.1, 8.2, 8.3.

The walls 4, 9 form the sidewalls and the conveying belt 6 forms the bottom of a conveying channel. The conveying belt 6 is positioned between the walls 4, 9 and guides loose crop material in a conveying direction CD through this feeding channel. This conveying belt 6 can be positioned in the feeding channel of a harvester or belong to the bottom conveyor (Kratzboden) below the storing room of a loader wagon. Fig. 2 to Fig. 4 show schematically the upper surface CM of the crop material which is conveyed on the belt 6. The window 3 is in flush with the wall 3 and is positioned between the crop material CM and the camera 1 and protects the camera 1 and the illumination source 10.1, 10.2. The window 3 is in the drawing plane of Fig. 2 and perpendicular to the drawing planes of Fig. 1 and Fig. 3.

At least one pump or further fluid conveying member (not shown) takes fluid out of a fluid reservoir (also not shown). The fluid reservoir is in fluid communication with the fluid ejectors 7.1, 7.2, 7.3. In the embodiment water is used as the fluid. It is possible to add a solvent to the water.

The middle fluid ejector 7.2 directs a fluid jet 8.2 on that surface of the window 3 which points to the conveying belt 6 and thereby to the conveyed crop material CM. The other two fluid ejectors 7.1, 7.3 direct two fluid jets 8.1, 8.3 not directly onto the window surface but onto two wall surface areas 4.1 and 4.3, resp., of the wall 4 wherein the wall surface areas 4.1, 4.3 are positioned angularly above the window 3, cf. Fig. 2. The window 3 and the wall surface areas 4.1, 4.3 belong to a receiving surface for fluid jets 8.1, 8.2, 8.3.

The fluid jet 8.2 is emitted in a direction perpendicular to the conveying direction CD. The two further fluid jets 8.1, 8.3 are ejected in two directions angular to the conveying direction CD. Thanks to the force of gravity the fluid which is ejected and which hits the wall surface areas 4.1, 4.3 flows downwards towards the conveying belt 6. As can be seen in Fig. 2 and Fig. 3 all three fluid jets 8.1, 8.2, 8.3 are directed sloping downwards and angularly towards the window 3 and the wall surface areas 4.1, 4.3, resp. As two fluid ejectors 7.1, 7.3 direct two fluid jets 8.1, 8.3 onto two different wall areas 4.1, 4.3 angularly above the center area of the window 3 and one fluid ejector 7.2 ejects a fluid jet 8.2 onto the window 3, at least one stream of fluid running downwards reaches the window 3 even in the case that the harvester is operated on a hilly environment and is significantly inclined with respect to a horizontal tilting axis perpendicular to the travelling direction.

The loose crop material CM on the belt 6 is conveyed along the window 3 when the crop material CM is conveyed between the two walls 4, 9. That surface of the window 3 which points to the crop material CM is made moistly by the fluid which is directed onto the window 3 and/or onto the wall surface area 4.1 or 4.3 above the window 3. Preferably the fluid serves as a solvent. The conveyed crop material CM wipes off sugar particles and other particles which stuck onto the window 3. Thanks to the fluid on the window 3 the crop material CM can easily remove the particles from the window surface.

In one implementation the fluid ejectors 7.1, 7.2, 7.3 always eject the fluid jets 8.1, 8.2, 8.3 while the harvester processes crop material CM. In a further implementation it is automatically detected whether or not a center area of the window 3 is behind crop material or is free. This detection can be performed by evaluating images from the camera 1. Only if no crop material is between a fluid ejector 7.1, 7.2, 7.3 and the center area, the respective fluid ejector ejects a fluid jet 8.1, 8.2, 8.3. In one implementation the or at least one fluid ejector 7.1, 7.2, 7.3 interrupts the fluid ejection no longer than a given time period.

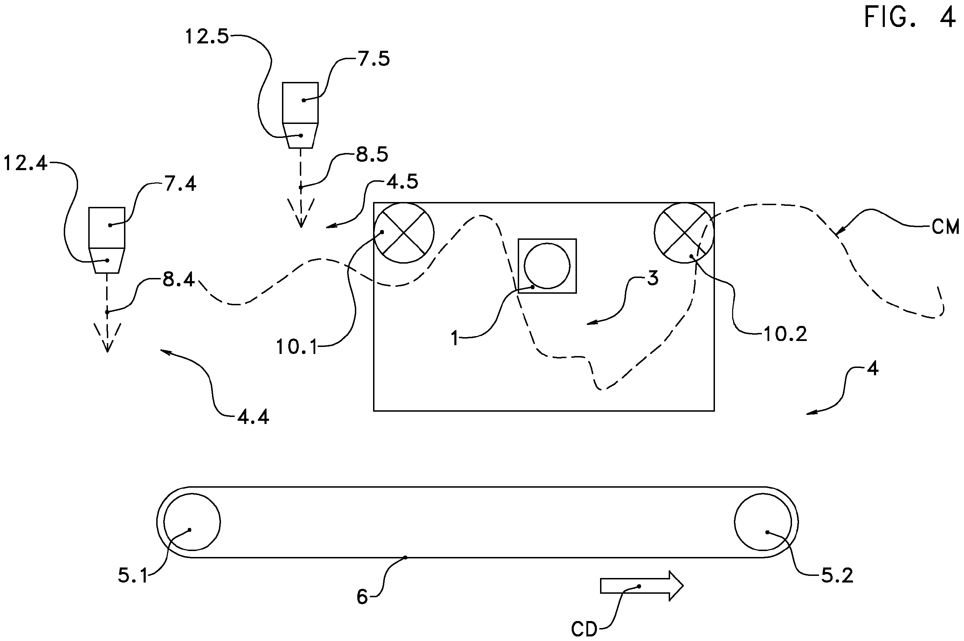

Fig. 4 shows a second embodiment of the invention in a side view. Coinciding parts have the same numbers than in the first embodiment. The task of the second embodiment is the same than that of the first embodiment. As in the first embodiment the bottom conveying belt 6 conveys loose crop material CM in the conveying direction CD and between the walls 4, 9. The crop material CM is thereby conveyed along the window 3. In contrast to the first embodiment fluid jets are neither directed onto the window 3 itself nor on a wall area above the window 3. A fluid ejector 7.4 with a nozzle 12.4 directs a fluid jet 8.4 onto a wall surface area 4.4 positioned upstream of the window 3. A further fluid ejector 7.5 directs a further fluid jet 8.5 onto a further wall surface area 4.5 which is also positioned upstream of the window 3. The term "upstream" refers to the conveying direction CD. The further wall surface area 4.5 is positioned between the wall surface area 4.4 and the window 3. The two wall surface areas 4.4, 4.5 are not on the same height but in different height levels such that conveyed crop material reaches the window 3 even if the harvester is operated on an ascending or descending ground. These wall surface areas 4.4, 4.5 belong to the receiving surface of the second embodiment. The conveyed crop material CM has been moistened by the fluid from the fluid ejectors 7.4, 7.5 and cleans the window 3 when being conveyed along the window 3.

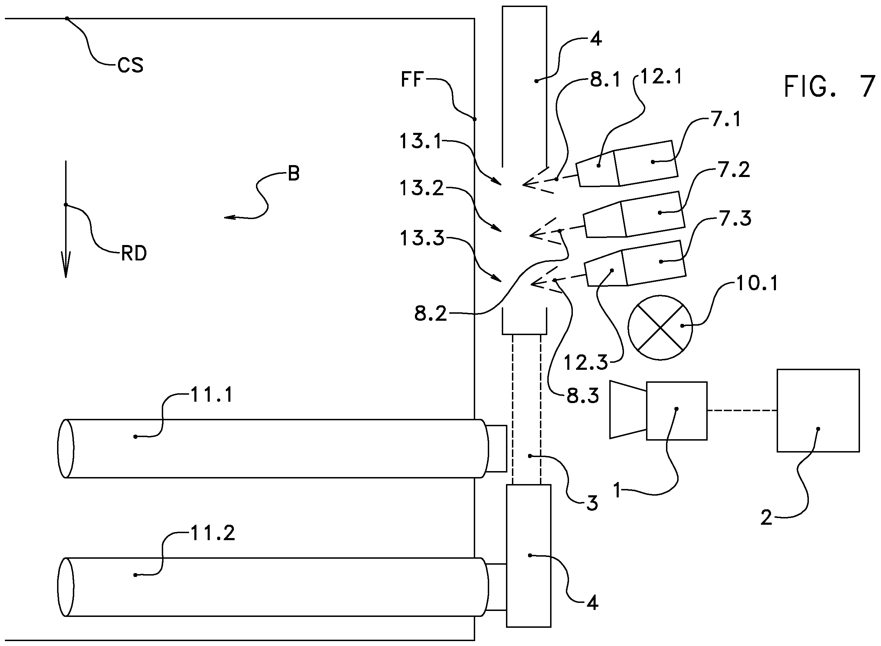

Fig. 5, Fig. 6, and Fig. 7 show a third embodiment of the invention. In this third embodiment the invention is used in a round baler which forms from loose crop material under pressure round-cylindrical bales in a drum-shaped bale forming chamber. Every round-cylindrical bale serves as a formed object and has two circular front faces and one circumferential surface extending between these front faces. The bale forming chamber is formed by two opposing sidewalls 4, 9 and by a bale forming means. Only the sidewall 4 is shown in Fig. 5 and Fig. 7. The window 3 is inserted into the chamber sidewall 4.

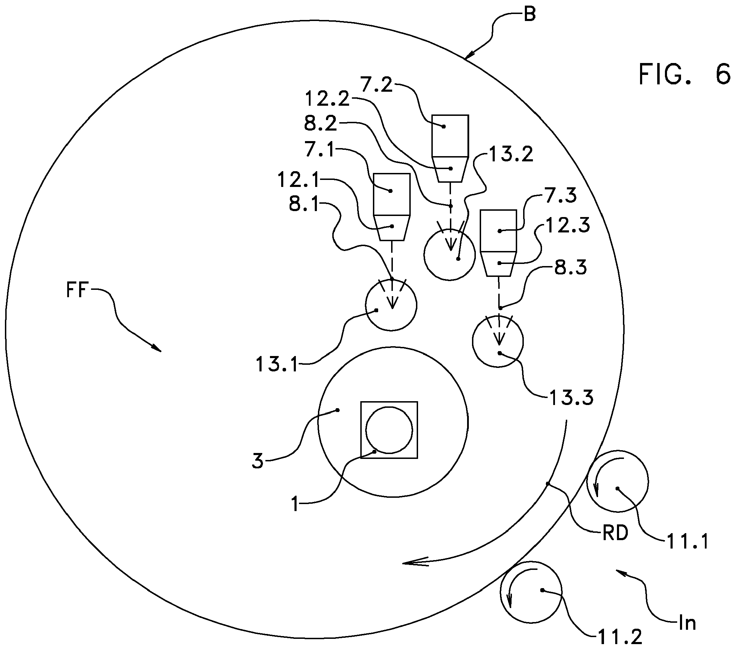

Loose crop material is injected into the bale forming chamber through a crop material inlet In. This inlet In is formed between the two pressing rollers (starter rollers) 11.1, 11.2. A bale forming means comprising pressing rollers and optionally at least one pressing belt (not shown) rotates the round-cylindrical bale B in the drum-shaped bale forming chamber around its own center axis (in the drawing planes of Fig. 5 and Fig. 7, perpendicular to the drawing plane of Fig. 6). Thereby the bale B is rotated around its center axis in the rotating direction RD. The front face FF facing towards the sensor 1, 2 is rotated along the sidewall 4.

Fig. 5 is a top view. Fig. 6 shows the third embodiment in a viewing direction parallel to the center axis and perpendicular to the front faces of the round-cylindrical bale B and perpendicular to the window plane. The viewing direction of Fig. 6 points onto the front face FF, i.e. seen in the viewing direction of Fig. 6 the bale B is behind the window 3 and behind the fluid ejectors 7.1, 7.2, 7.3. Fig. 7 shows the third embodiment in a side view wherein the front face FF of the bale B and the window plane are perpendicular to the drawing plane of Fig. 7. In Fig. 7 the bale B is behind the pressing rollers 11.1, 11.2.

In this exemplary implementation of the third embodiment also three fluid ejectors 7.1, 7.2, 7.3 with three nozzles 12.1, 12.2, 12.3 are used. Of course an alternative number of fluid ejectors can also be used in this third embodiment. The window 3 and three apertures 13.1, 13.2, 13.3 are inserted into the chamber sidewall 4. Every nozzle 12.1, 12.2, 12.3 is situated behind a corresponding aperture 13.1, 13.2, 13.3. It is possible that lips can selectively cover or release an aperture 13.1, 13.2, 13.3. The fluid ejectors 7.1, 7.2, 7.3 direct three fluid jets 8.1, 8.2, 8.3 through the apertures 13.1, 13.2, 13.3 onto the front face FF of the bale B. In one implementation water is used as the fluid.

As can best be seen in Fig. 6, the three apertures 13.1, 13.2, 13.3 are situated upstream of the window 3 - upstream seen in the rotating direction RD. Fluid jets 8.1, 8.2, 8.3 are ejected and are directed through the apertures 13.1, 13.2, 13.3 onto the front face FF of the bale B. The fluid jets 8.1, 8.2, 8.3 moisten the front face FF. The moist front face FF is conveyed along the window 3 and cleans the window 3. The expanding force of the compressed crop material improves the cleaning function.

**LIST OF REFERENCE SIGNS**

| | |
|---|---|
| 1 | camera, takes digital images from the conveyed crop material, belong to one sensor of the measuring device |
| 2 | image processing unit, processes signals from the camera 1, belong to one sensor of the measuring device |
| 3 | window to be cleaned and inserted in the wall 4 and being in flush with the wall 4 |
| 4 | wall in which the window 3 is inserted |
| 4.1, 4.3 | wall surface area above the window 3 against which the fluid jets 8.1, 8.3 are directed, belong to a receiving surface |
| 4.4, 4.5 | wall surface area upstream of the window 3 against which the fluid jets 8.4, 8.5 are directed, belong to a receiving surface |
| 5.1, 5.2 | deflecting rollers for the bottom conveying belt 6 |
| 6 | bottom conveying belt, guided around the rollers 5.1, 5.2, positioned between the walls 4, 9 |
| 7.1, 7.2, 7.3 | fluid ejectors of the first and third embodiments, eject the fluid jets 8.1, 8.2, 8.3 onto the wall surface areas 4.1, 4.3 and onto the window 3 or onto the front face FF, resp. |
| 7.4, 7.5 | fluid ejectors of the second embodiment, eject the fluid jets 8.4, 8.5 onto the wall surface areas 4.4, 4.5 |
| 8.1, 8.2, 8.3 | fluid jets ejected by the fluid ejectors 7.1, 7.2, 7.3 |
| 8.4, 8.5 | fluid jets ejected by the fluid ejectors 7.4, 7.5 |
| 9 | wall opposite to the wall 4 |
| 10.1, 10.2 | light source for illuminating the crop material CM, B |
| 11.1, 11.2 | pressing rollers rotating the bale B |
| 12.1, 12.2, 12.3 | nozzles of the fluid ejectors 7.1, 7.2, 7.3 |
| 12.4, 12.5 | nozzles of the fluid ejectors 7.4, 7.5 |
| 13.1, 13.2, 13.3 | apertures in the wall 4 through which the fluid ejectors 7.1, 7.2, 7.3 emit the fluid jets 8.1, 8.2, 8.3 onto the front face FF |
| B | round-cylindrical bale with the front face FF |
| CD | conveying direction of the bottom conveying belt 6 |
| CM | crop material conveyed by the conveying belt 6 |
| CS | circumferential surface of the round-cylindrical bale B |
| FF | front face of the round-cylindrical bale B pointing to the wall 4, serves as one receiving surface |
| In | crop material inlet |
| RD | direction in which the bale B is rotated |

## Claims

1. Agricultural processing machine comprising
- a conveying device (5.1, 5.2, 6, 11.1, 11.2),
- a wall (4), and
- a measuring device (1, 2, 3, 10.1, 10.2),
wherein the measuring device (1, 2, 3, 10.1, 10.2) comprises
- at least one sensor (1, 2, 10.1, 10.2) and
- a window (3) being inserted into the wall (4),
wherein the conveying device (5.1, 5.2, 6, 11.1, 11.2) is arranged to convey loose material (CM, B) along the wall (4) and thereby along the window (3),
wherein the window (3) is positioned between
- the or at least one sensor (1, 2, 10.1, 10.2) of the measuring device (1, 2, 3, 10.1, 10.2) and
- the conveyed loose material (CM, B), and
wherein the or at least one sensor (1, 2, 10.1, 10.2) is arranged to measure in a contactless manner a characteristic of the loose material (CM, B) conveyed along the window (3),
**characterized in that**
the agricultural processing machine further comprises at least one fluid ejector (7.1, 7.2, 7.3, 7.4, 7.5),
wherein the or every fluid ejector (7.1, 7.2, 7.3, 7.4, 7.5) is arranged to eject at least one jet (8.1, 8.2, 8.3, 8.4, 8.5) of fluid against a receiving surface (3, 4, FF) formed in the agricultural processing machine,
thereby providing fluid in a space between
- the conveyed loose material (CM) and
- that surface of the window (3) which points towards the conveyed loose material (CM, B).

2. Agricultural processing machine according to claim 1,
**characterized in that**
the measuring device (1, 2, 3, 10.1, 10.2) is arranged to measure a value indicative of the amount of loose material (CM, B) conveyed along the window (3),
wherein the or at least one fluid ejector (7.1, 7.2, 7.3, 7.4, 7.5) is arranged
- to eject a fluid jet (8.1, 8.2, 8.3, 8.4, 8.5) if the measured material amount is below a given threshold and / or
- to interrupt the ejection as long as the material amount is above a given threshold.

3. Agricultural processing machine according to one of the preceding claims,
**characterized in that**
the or at least one fluid ejector (7.1, 7.3) is arranged to direct at least one fluid jet (8.1, 8.3) onto a wall surface area (4.1, 4.3) which is positioned above the window (3).

4. Agricultural processing machine according to one of the preceding claims,
**characterized in that**
the conveying device (5.1, 5.2, 6, 11.1, 11.2) is arranged to convey the loose material (CM) in a conveying direction (CD) along the wall (4),
wherein the or at least one fluid ejector (7.4, 7.5) is arranged to direct at least one fluid jet (8.4, 8.5) onto a wall surface area (4.4, 4.5) which is - seen in the conveying direction (CD) - positioned upstream from of the window (3).

5. Agricultural processing machine according to one of the preceding claims,
**characterized in that**
the agricultural processing machine is arranged to press together the conveyed loose material (CM),
thereby forming on board of the machine an object (B) comprising an outer object surface (FF),
wherein the conveying device (5.1, 5.2, 6, 11.1, 11.2) is arranged to convey the outer object surface (FF) along the wall (4) and thereby along the window (3).

6. Agricultural processing machine according to claim 5,
**characterized in that**
the or at least one fluid ejector (7.1, 7.2, 7.3, 74, 7.5) is arranged to direct at least one fluid jet (8.1, 8.2, 8.3, 8.4, 8.5) onto the outer object surface (FF) conveyed along the window (3).

7. Agricultural processing machine according to one of the preceding claims,
**characterized in that**
the processing machine comprises a fluid ejector actuator,
wherein the fluid ejector actuator is arranged to pivot the or at least one fluid ejector (7.1, 7.2, 7.3, 7.4, 7.5) with respect to the receiving surface (3, 4, FF).

8. Agricultural processing machine according to one of the preceding claims,
**characterized in that**
the window (3) is in flush with the wall (4).

9. Agricultural processing machine according to one of the preceding claims,
**characterized in that**
at least one lens or optical filter is integrated into the window (3).

10. Method for processing loose material by using an agricultural processing machine,
wherein the processing machine comprises
- a conveying device (5.1, 5.2, 6, 11.1, 11.2),
- a wall (4), and
- a measuring device (1, 2, 3, 10.1, 10.2),
wherein the measuring device (1, 2, 3, 10.1, 10.2) comprises
- at least one sensor (1, 2, 10.1, 10.2) and
- a window (3),
wherein the window (3) is inserted into the wall (4), and
wherein the method comprises the steps that
the conveying device (5.1, 5.2, 6, 11.1, 11.2) conveys loose material (CM) along the wall (4) and thereby along the window (3)
such that the window (3) is positioned between
- the or at least one sensor of the measuring device (1, 2, 10.1, 10.2) and
- the conveyed loose material (CM, B), and
the or at least one sensor (1, 2, 10.1, 10.2) measures in a contactless manner a characteristic of the loose material (CM, B) while the loose material (CM, B) is conveyed along the window (3),
**characterized in that**
the processing machine further comprises at least one fluid ejector (7.1, 7.2, 7.3, 7.4, 7.5), wherein the method comprises the further step that
the or at least one fluid ejector (7.1, 7.2, 7.3, 7.4, 7.5) ejects at least one jet (8.1, 8.2, 8.3, 8.4, 8.5) of fluid against a receiving surface (3, 4, FF) formed in the processing machine such that fluid is provided in a space between
- the conveyed loose material (CM, B) and
- that surface of the window (3) which points towards the conveyed loose material (CM, B).

11. Material processing method according to claim 10,
**characterized in that**
the processing machine
- presses together the loose conveyed material (CM, B) such that an object (B) comprising an outer object surface (FF) is formed on board of the machine and
- conveys the outer object surface (FF) along the wall (4) and thereby along the window (3),
wherein the or at least one fluid ejector (7.1, 7.2, 7.3, 7.4, 7.5) directs at least one fluid jet (8.1, 8.2, 8.3, 8.4, 8.5) onto the outer object surface (FF) which is conveyed along the window (3).

12. Material processing method according to claim 10 or claim 11,
**characterized in that**
a value indicative of the amount of loose material (CM) which is conveyed along the window (3) is measured,
wherein the or at least one fluid ejector (7.1, 7.2, 7.3, 7.4, 7.5) ejects the or at least one fluid jet (8.1, 8.2, 8.3, 8.4, 8.5) depending on the measured amount value.

## Patentansprüche

1. Landwirtschaftliche Bearbeitungsmaschine, umfassend:
- eine Fördereinrichtung (5.1, 5.2, 6, 11.1, 11.2),
- eine Wand (4) und
- eine Messeinrichtung (1, 2, 3, 10.1, 10.2), wobei die Messeinrichtung (1, 2, 3, 10.1, 10.2)
- mindestens einen Sensor (1, 2, 10.1, 10.2) und
- ein Fenster (3), das in die Wand (4) eingesetzt ist, umfasst,
wobei die Fördereinrichtung (5.1, 5.2, 6, 11.1, 11.2) ausgelegt ist, um loses Material (CM, B) entlang der Wand (4) und damit entlang des Fensters (3) zu befördern,
wobei das Fenster (3) zwischen
- dem oder mindestens einem Sensor (1, 2, 10.1, 10.2) der Messeinrichtung (1, 2, 3, 10.1, 10.2) und
- dem beförderten losen Material (CM, B) positioniert ist, und
wobei der oder mindestens ein Sensor (1, 2, 10.1, 10.2) ausgelegt ist, um auf kontaktfreie Weise ein Merkmal des losen Materials (CM, B) zu messen, das entlang des Fensters (3) befördert wird,
**dadurch gekennzeichnet, dass**
die landwirtschaftliche Bearbeitungsmaschine ferner mindestens einen Fluidauswerfer (7.1, 7.2, 7.3, 7.4, 7.5) umfasst,
wobei der oder jeder Fluidauswerfer (7.1, 7.2, 7.3, 7.4, 7.5) so ausgelegt ist, dass er mindestens einen Strahl (8.1, 8.2, 8.3, 8.4, 8.5) von Fluid gegen eine Empfängerfläche (3, 4, FF) auswirft, die in der landwirtschaftlichen Bearbeitungsmaschine ausgebildet ist,
wodurch Fluid in einem Raum zwischen
- dem beförderten losen Material (CM) und
- der Fläche des Fensters (3), die auf das geförderte lose Material (CM, B) zeigt, bereitgestellt wird.

2. Landwirtschaftliche Bearbeitungsmaschine nach Anspruch 1,
**dadurch gekennzeichnet, dass**
die Messeinrichtung (1, 2, 3, 10.1, 10.2) so ausgelegt ist, dass sie einen Wert misst, der für die Menge des losen Materials (CM, B), das entlang des Fensters (3) befördert wird, indikativ ist, wobei der oder mindestens ein Fluidauswerfer (7.1, 7.2, 7.3, 7.4, 7.5) so ausgelegt ist, dass er
- einen Fluidstrahl (8.1, 8.2, 8.3, 8.4, 8.5) auswirft,
wenn die gemessene Materialmenge unter einer gegebenen Schwelle liegt und/oder
- den Auswurf unterbricht, solange die Materialmenge über einer gegebenen Schwelle liegt.

3. Landwirtschaftliche Bearbeitungsmaschine nach einem der vorstehenden Ansprüche,
**dadurch gekennzeichnet, dass**
der oder mindestens ein Fluidauswerfer (7.1, 7.3) so ausgelegt ist, dass er mindestens einen Fluidstrahl (8.1, 8.3) auf einen Wandflächenbereich (4.1, 4.3) richtet, der über dem Fenster (3) positioniert ist.

4. Landwirtschaftliche Bearbeitungsmaschine nach einem der vorstehenden Ansprüche,
**dadurch gekennzeichnet, dass**
die Fördereinrichtung (5.1, 5.2, 6, 11.1, 11.2) so ausgelegt ist, dass sie das lose Material (CM) in Förderrichtung (CD) entlang der Wand (4) befördert,
wobei der oder mindestens ein Fluidauswerfer (7.4, 7.5) so ausgelegt ist, dass er mindestens einen Fluidstrahl (8.4, 8.5) auf einen Wandflächenbereich (4.4, 4.5) richtet, der - in Förderrichtung (CD) gesehen - dem Fenster (3) vorgelagert positioniert ist.

5. Landwirtschaftliche Bearbeitungsmaschine nach einem der vorstehenden Ansprüche,
**dadurch gekennzeichnet, dass**
die landwirtschaftliche Bearbeitungsmaschine so ausgelegt ist, dass sie das beförderte lose Material (CM) zusammendrückt,
wodurch an Bord der Maschine ein Objekt (B) ausgebildet wird, das eine Objektaußenfläche (FF) umfasst,
wobei die Fördereinrichtung (5.1, 5.2, 6, 11.1, 11.2) so ausgelegt ist, dass sie die Objektaußenfläche (FF) entlang der Wand (4) befördert und dadurch entlang des Fensters (3).

6. Landwirtschaftliche Bearbeitungsmaschine nach Anspruch 5,
**dadurch gekennzeichnet, dass**
der oder mindestens ein Fluidauswerfer (7.1, 7.2, 7.3, 7.4, 7.5) so ausgelegt ist, dass er mindestens einen Fluidstrahl (8.1, 8.2, 8.3, 8.4, 8.5) auf die Objektaußenfläche (FF) richtet, die entlang des Fensters (3) befördert wird.

7. Landwirtschaftliche Bearbeitungsmaschine nach einem der vorstehenden Ansprüche,
**dadurch gekennzeichnet, dass**
die Bearbeitungsmaschine ein Fluidauswerfer-Betätigungselement umfasst,
wobei das Fluidauswerfer-Betätigungselement so ausgelegt ist, dass es den oder mindestens einen Fluidauswerfer (7.1, 7.2, 7.3, 7.4, 7.5) in Bezug auf die Empfängerfläche (3, 4, FF) schwenkt.

8. Landwirtschaftliche Bearbeitungsmaschine nach einem der vorstehenden Ansprüche,
**dadurch gekennzeichnet, dass**
das Fenster (3) bündig mit der Wand (4) ist.

9. Landwirtschaftliche Bearbeitungsmaschine nach einem der vorstehenden Ansprüche,
**dadurch gekennzeichnet, dass**
mindestens eine Linse oder ein optischer Filter in das Fenster (3) integriert ist.

10. Verfahren zum Bearbeiten von losem Material durch Anwenden einer landwirtschaftlichen Bearbeitungsmaschine,
wobei die Bearbeitungsmaschine
- eine Fördereinrichtung (5.1, 5.2, 6, 11.1, 11.2),
- eine Wand (4) und
- eine Messeinrichtung (1, 2, 3, 10.1, 10.2) umfasst,
wobei die Messeinrichtung (1, 2, 3, 10,1, 10.2)
- mindestens einen Sensor (1, 2, 10.1, 10.2) und
- ein Fenster (3) umfasst,
wobei das Fenster (3) in die Wand (4) eingesetzt ist, und
wobei das Verfahren die Schritte umfasst, dass die Fördereinrichtung (5.1, 5.2, 6, 11.1, 11.2) loses Material (CM) entlang der Wand (4) und dadurch entlang des Fensters (3) so befördert, dass das Fenster (3) zwischen
- dem oder mindestens einem Sensor der Messeinrichtung (1, 2, 10.1, 10.2) und
- dem beförderten losen Material (CM, B) positioniert wird und
der oder mindestens ein Sensor (1, 2, 10.1, 10.2) auf kontaktfreie Weise ein Merkmal des losen Materials (CM, B) misst, während das lose Material (CM, B) entlang des Fensters (3) befördert wird, **dadurch gekennzeichnet, dass**
die Bearbeitungsmaschine ferner mindestens einen Fluidauswerfer (7.1, 7.2, 7.3, 7.4, 7.5) umfasst, wobei das Verfahren den weiteren Schritt umfasst, dass der oder mindestens ein Fluidauswerfer (7.1, 7.2, 7.3, 7.4, 7.5) mindestens einen Strahl (8.1, 8.2, 8.3, 8.4, 8.5) von Fluid gegen eine Empfängerfläche (3, 4, FF) auswirft, die in der Bearbeitungsmaschine ausgebildet ist, sodass Fluid in einem Raum zwischen
- dem beförderten losen Material (CM, B) und
- der Oberfläche des Fensters (3) bereitgestellt wird, die auf das beförderte lose Material (CM, B) zeigt.

11. Materialbearbeitungsverfahren nach Anspruch 10, **dadurch gekennzeichnet, dass**
die Bearbeitungsmaschine
- das lose beförderte Material (CM, B) so zusammendrückt, dass ein Objekt (B), das eine Objektaußenfläche (FF) umfasst, an Bord der Maschine ausgebildet wird und
- die Objektaußenfläche (FF) entlang der Wand (4) und dadurch entlang des Fensters (3) befördert,
wobei der oder mindestens ein Fluidauswerfer (7.1, 7.2, 7.3, 7.4, 7.5) mindestens einen Fluidstrahl (8.1, 8.2, 8.3, 8.4, 8.5) auf die Objektaußenfläche (FF) entlang des Fensters (3) richtet.

12. Materialbearbeitungsverfahren nach Anspruch 10 oder Anspruch 11,
**dadurch gekennzeichnet, dass**
ein Wert gemessen wird, der für die Menge an losem Material (CM) indikativ ist, das entlang des Fensters (3) befördert wird,
wobei der oder mindestens ein Fluidauswerfer (7.1, 7.2, 7.3, 7.4, 7.5) je nach dem gemessenen Mengenwert den oder mindestens einen Fluidstrahl (8.1, 8.2, 8.3, 8.4, 8.5) auswirft.

## Revendications

1. Machine de traitement agricole comprenant
- un dispositif de transport (5.1, 5.2, 6, 11.1, 11.2),
- une paroi (4), et
- un dispositif de mesure (1, 2, 3, 10.1, 10.2) le dispositif de mesure (1, 2, 3, 10.1, 10.2) comprenant
- au moins un détecteur (1, 2, 10.1, 10.2) et
- une fenêtre (3) insérée dans la paroi (4),
le dispositif de transport (5.1, 5.2, 6, 11.1, 11.2) étant agencé pour transporter un produit en vrac (CM, B) le long de la paroi (4) et, ainsi, le long de la fenêtre (3), la fenêtre (3) étant positionnée entre
- le détecteur ou au moins un détecteur (1, 2, 10.1, 10.2) du dispositif de mesure (1, 2, 3, 10.1, 10.2) et
- le produit en vrac (CM, B) transporté, et le détecteur ou au moins un détecteur (1, 2, 10.1, 10.2) étant agencé pour mesurer sans contact une caractéristique du produit en vrac (CM, B) transporté le long de la fenêtre (3),
la machine de traitement agricole étant **caractérisée en ce que**
elle comprend également au moins un éjecteur de fluide (7.1, 7.2, 7.3, 7.4, 7.5),
l'éjecteur de fluide ou chaque éjecteur de fluide (7.1, 7.2, 7.3, 7.4, 7.5) étant agencé pour éjecter au moins un jet (8.1, 8.2, 8.3, 8.4, 8.5) de fluide contre une surface réceptrice (3, 4, FF) formée dans la machine de traitement agricole,
ce qui permet d'acheminer un fluide dans un espace situé entre
- le produit en vrac (CM) transporté, et
- la surface de la fenêtre (3) qui pointe en direction du produit en vrac (CM, B) transporté.

2. Machine de traitement agricole selon la revendication 1
**caractérisée en ce que**
le dispositif de mesure (1, 2, 3, 10.1, 10.2) est agencé pour mesurer une valeur représentative de la quantité de produit en vrac (CM, B) transporté le long de la fenêtre (3),
l'éjecteur de fluide ou au moins un éjecteur de fluide (7.1, 7.2, 7.3, 7.4, 7.5) étant agencé
- pour éjecter un jet de fluide (8.1, 8.2, 8.3, 8.4, 8.5) si la quantité de produit mesurée est inférieure à un seuil donné et/ou
- pour interrompre l'éjection tant que la quantité de produit est supérieure à un seuil donné.

3. Machine de traitement agricole selon l'une des revendications précédentes,
**caractérisée en ce que**
l'éjecteur de fluide ou au moins un éjecteur de fluide (7.1, 7.3) est agencé pour diriger au moins un jet de fluide (8.1, 8.3) sur une région de surface de paroi (4.1, 4.3) qui est positionnée au-dessus de la fenêtre (3) .

4. Machine de traitement agricole selon l'une des revendications précédentes,
**caractérisée en ce que**
le dispositif de transport (5.1, 5.2, 6, 11.1, 11.2) est agencé pour transporter le produit en vrac (CM) dans une direction de transport (CD) longeant la paroi (4),
l'éjecteur de fluide ou au moins un éjecteur de fluide (7.4, 7.5) est agencé pour diriger au moins un jet de fluide (8.4, 8.5) sur une région de surface de paroi (4.4, 4.5) qui est - vue dans la direction de transport (CD) - positionnée en amont par rapport à la fenêtre (3) .

5. Machine de traitement agricole selon l'une des revendications précédentes,
la machine de traitement agricole étant **caractérisée en ce que**
elle est agencée pour compacter le produit en vrac (CM) transporté,
ce qui permet de former à bord de la machine un objet (B) comprenant une surface d'objet extérieure (FF),
le dispositif de transport (5.1, 5.2, 6, 11.1, 11.2) étant agencé pour transporter la surface d'objet extérieure (FF) le long de la paroi (4) et, ainsi, le long de la fenêtre (3).

6. Machine de traitement agricole selon la revendication 5,
**caractérisée en ce que**
l'éjecteur de fluide ou au moins un éjecteur de fluide (7.1, 7.2, 7.3, 7.4, 7.5) est agencé pour diriger au moins un jet de fluide (8.1, 8.2, 8.3, 8.4, 8.5) sur la surface d'objet extérieure (FF) transportée le long de la fenêtre (3).

7. Machine de traitement agricole selon l'une des revendications précédentes,
la machine de traitement étant **caractérisée en ce que** elle comprend un actionneur d'éjecteur de fluide, l'actionneur d'éjecteur de fluide étant agencé pour faire pivoter l'éjecteur de fluide ou au moins un éjecteur de fluide (7.1, 7.2, 7.3, 7.4, 7.5) par rapport à la surface réceptrice (3, 4, FF).

8. Machine de traitement agricole selon l'une des revendications précédentes,
**caractérisée en ce que**
la fenêtre (3) est au ras de la paroi (4).

9. Machine de traitement agricole selon l'une des revendications précédentes,
**caractérisée en ce que**
au moins un objectif ou filtre optique est intégré dans la fenêtre (3).

10. Procédé pour traiter un produit en vrac en utilisant une machine de traitement agricole,
la machine de traitement comprenant
- un dispositif de transport (5.1, 5.2, 6, 11.1, 11.2),
- une paroi (4), et
- un dispositif de mesure (1, 2, 3, 10.1, 10.2) le dispositif de mesure (1, 2, 3, 10.1, 10.2) comprenant
- au moins un détecteur (1, 2, 10.1, 10.2) et
- une fenêtre (3),
la fenêtre (3) étant insérée dans la paroi (4), et
le procédé comprenant les étapes selon lesquelles le dispositif de transport (5.1, 5.2, 6, 11.1, 11.2) transporte un produit en vrac (CM) le long de la paroi (4) et, ainsi, le long de la fenêtre (3),
de sorte que la fenêtre (3) est positionnée entre
- le détecteur ou au moins un détecteur du dispositif de mesure (1, 2, 10.1, 10.2) et
- le produit en vrac (CM, B) transporté, et
le détecteur ou au moins un détecteur (1, 2, 10.1, 10.2) mesure sans contact une caractéristique du produit en vrac (CM, B) pendant que le produit en vrac (CM, B) est transporté le long de la fenêtre (3),
**caractérisé en ce que**
la machine de traitement comprend également au moins un éjecteur de fluide (7.1, 7.2, 7.3, 7.4, 7.5),
le procédé comprenant également l'étape selon laquelle l'éjecteur de fluide ou au moins un éjecteur de fluide (7.1, 7.2, 7.3, 7.4, 7.5) éjecte au moins un jet (8.1, 8.2, 8.3, 8.4, 8.5) de fluide contre une surface réceptrice (3, 4, FF) formée dans la machine de traitement,
de telle façon que le fluide soit acheminé dans un espace situé entre
- le produit en vrac (CM, B) transporté, et
- la surface de la fenêtre (3) qui pointe en direction du produit en vrac (CM, B) transporté.

11. Procédé de traitement de produit selon la revendication 10,
**caractérisé en ce que**
la machine de traitement
- compacte le produit en vrac (CM, B) transporté, de façon à former un objet (B) comprenant une surface d'objet extérieure (FF) à bord de la machine, et
- transporte la surface d'objet extérieure (FF) le long de la paroi (4) et, ainsi, le long de la fenêtre (3),
l'éjecteur de fluide ou au moins un éjecteur de fluide (7.1, 7.2, 7.3, 7.4, 7.5) dirigeant au moins un jet de fluide (8.1, 8.2, 8.3, 8.4, 8.5) sur la surface d'objet extérieure (FF) qui est transportée le long de la fenêtre (3).

12. Procédé de traitement de produit selon la revendication 10 ou 11,
**caractérisé en ce que**
une valeur représentative de la quantité de produit en vrac (CM) qui est transporté le long de la fenêtre (3) est mesurée,
l'éjecteur de fluide ou au moins un éjecteur de fluide (7.1, 7.2, 7.3, 7.4, 7.5) éjecte le jet de fluide ou au moins un jet de fluide (8.1, 8.2, 8.3, 8.4, 8.5) en fonction de la valeur de quantité mesurée.
